(19) Europäisches Patentamt
European Patent Office
Office européen des brevets

(11) Veröffentlichungsnummer: **0 057 880**
**B1**

(12) # EUROPÄISCHE PATENTSCHRIFT

(45) Veröffentlichungstag der Patentschrift: **20.03.85**

(51) Int. Cl.⁴: **C 09 B 67/20**, C 09 B 67/18, C 09 B 41/00, D 06 P 1/02, D 06 P 1/645

(21) Anmeldenummer: **82100659.0**

(22) Anmeldetag: **30.01.82**

(54) **Azopigmentpräparationen, Verfahren zu ihrer Herstellung und ihre Verwendung.**

(30) Priorität: **07.02.81 DE 3104257**

(43) Veröffentlichungstag der Anmeldung: **18.08.82 Patentblatt 82/33**

(45) Bekanntmachung des Hinweises auf die Patenterteilung: **20.03.85 Patentblatt 85/12**

(84) Benannte Vertragsstaaten: **BE CH DE FR GB IT LI NL**

(56) Entgegenhaltungen:
**DE - A - 1 173 601**
**DE - A - 1 469 740**
**DE - A - 1 469 782**
**FR - A - 1 559 870**
**FR - A - 2 135 246**
**GB - A - 1 162 036**
**GB - A - 1 203 558**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Dopfer, Peter, Albert-Blank-Strasse 34a, D-6230 Frankfurt am Main 80 (DE)**
Erfinder: **Ostermeier, Johann, Dr., Neikenweg 11, D-6238 Hofheim am Taunus (DE)**
Erfinder: **Schwerin, Siegfried, Dr., Frankfurter Strasse 33, D-6238 Hofheim am Taunus (DE)**

**EP 0 057 880 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Azopigmentpräparationen, die durch einen Gehalt an 5 bis 40% eines langkettigen aliphatischen primären Amins und 2 bis 20%, jeweils bezogen auf das Gewicht des Pigments, eines Diamins der allgemeinen Formel I

$$H_2N - A - NH_2 \qquad (I)$$

in der A ein aliphatischer Kohlenwasserstoffrest mit 6 bis 30 C-Atomen ist, gekennzeichnet sind.

Die Erfindung betrifft weiterhin ein Verfahren zur Herstellung dieser Präparationen, das dadurch gekennzeichnet ist, dass man das langkettige aliphatische Amin und das Diamin vor, während oder nach der Kupplung zusetzt.

Die erfindungsgemässen Azopigmentpräparationen sind sehr farbstark, gut fliessfähig, gut dispergierbar und ergeben beim Einarbeiten in Tiefdruckfarben glänzende Drucke, die auch durch dünne Papiere nicht durchschlagen. Die Erfindung betrifft deshalb auch die Verwendung dieser Azopigmentpräparationen in Tiefdruckfarben.

Bevorzugte Ausgestaltungen der Erfindung werden im folgenden näher erläutert:

Als Azopigmente kommen alle in Tiefdruckfarben verwendeten Produkte in Betracht, insbesondere Pigmente der Acetoacetylarylamid-Reihe. Besonders bevorzugt sind Disazopigmente wie C.I. Pigment Yellow 12, 13, 14, 16, 17, 83, 106, 114, 126 und 127.

Als langkettige aliphatische primäre Amine kommen die üblichen technischen Fettamine in Betracht wie Cocosfettamin, Oleylamin, Stearylamin oder Talgfettamin sowie Alkyl-alkylendiamine vom Typ des Talgfettpropylendiamins.

Aus der DE-AS 1 469 782 ist es bereits bekannt, dass man leicht dispergierbare Pigmente erhält, wenn man bei der Kupplung solche langkettigen Amine zusetzt. Diese Produkte zeigen allerdings den Nachteil, dass damit hergestellte Tiefdruckfarben durch dünne Papiere durchschlagen.

Als Diamine der Formel I kommen insbesondere Produkte in Betracht, deren Rest A bis zu 24 Kohlenstoffatome aufweist. A kann geradkettig oder verzweigt sein und cycloaliphatische Ringe enthalten. Bevorzugte Reste A sind:

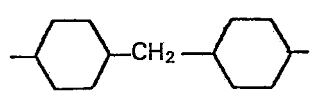

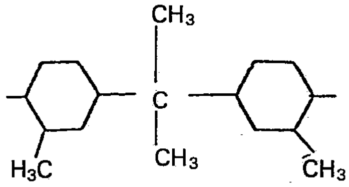

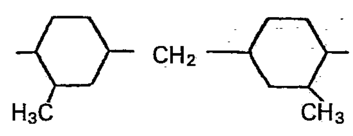

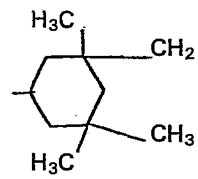

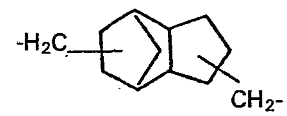

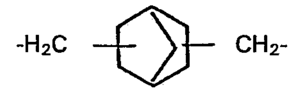

$-(CH_2)_6-$

$-CH_2-C(CH_3)_2-CH_2-CH(CH_3)-CH_2-CH_2-$

Die Verwendung von cycloaliphatischen Aminen als Zusatz bei der Herstellung von Azopigmenten ist bereits aus der DE-AS 1 592 872 bekannt. Die so erhaltenen Produkte zeigen jedoch eine unbefriedigende Dispergierbarkeit.

Das Mengenverhältnis des langkettigen aliphatischen primären Amins zum Diamin der Formel I kann in gewissen Grenzen schwanken und richtet sich nach den angestrebten Eigenschaften. Wenn die leichte Dispergierbarkeit im Vordergrund steht, wählt man mehr langkettiges Amin, wenn das Nichtdurchschlagen der Druckfarben Voraussetzung ist, wird man relativ mehr Diamin einsetzen. Die günstigsten Relationen sind durch einfache Vorversuche leicht zu ermitteln.

Beim erfindungsgemässen Verfahren können die Amine einzeln oder gemeinsam vor, während oder nach der Kupplung zugesetzt werden. Es ist also möglich, die Amine als Fällungshilfsmittel bei der Fällung der Kupplungskomponente einzusetzen, sie nach dem Kuppeln der Kuppelbrühe zuzusetzen oder erst den Presskuchen damit zu präparieren. Weiterhin können die Amine bei einem anschliessenden Finishprozess zugesetzt werden.

Es ist im allgemeinen vorteilhaft, als weiteres Hilfsmittel einen Emulgator zuzusetzen. Als Emulgatoren kommen die hierfür üblicherweise eingesetzten Produkte in Betracht wie langkettige Aminoxide und Phosphinoxide, vorteilhaft jedoch Salze langkettiger Amine, da diese bei der alkalischen Behandlung in die Amine übergeführt werden, die dann als Präpariermittel wirken. Solche Emulgatoren sind beispielsweise aus den DE-AS 1 173 601 und 1 544 494 bekannt.

Es kann weiterhin von Vorteil sein, anstelle des Emulgators oder zusätzlich eine kationische Verbindung vom Typ der Phasentransferkatalysatoren zuzusetzen. Geeignet sind beispielsweise Stearyl-trimethyl-ammoniumchlorid oder Dodecyl-benzyl-dimethyl-ammoniumchlorid.

Die Emulgatoren und kationischen Verbindungen werden in praxisüblichen Mengen eingesetzt, also beispielsweise bis zu etwa 12% Emulgator, bezogen

auf das Gewicht der Kupplungskomponente, und bis zu etwa 8% an kationischer Verbindung, bezogen auf das Gewicht des Pigments. Vom langkettigen aliphatischen Amin werden 5 bis 40%, insbesondere 10 bis 30%, und vom Diamin der Formel I 2 bis 20,%, insbesondere 4 bis 12%, jeweils bezogen auf das Gewicht des Pigments, zugesetzt.

Aus der DE-PS 2 121 673 ist es bekannt, durch Zusatz von Aralkyl-alkylenaminen Pigmentpräparationen zu erhalten, die Druckfarben liefern, die beim Druck auf dünne und minderwertige Papiere nicht durchschlagen. Gegenüber diesen Präparationen zeigen die erfindungsgemässen Produkte eine verbesserte Dispergierbarkeit und erhöhte Farbstärke.

In den folgenden Beispielen beziehen sich Prozentangaben auf das Gewicht.

*Beispiel 1*

1012 g 3,3'-Dichlor-4,4'-diamino-biphenyl werden mit 6 Liter Wasser und 2,5 Liter 30%iger Salzsäure angerührt und mit 1052 ml 40%iger Natriumnitritlösung bei 0 bis 15°C bis-diazotiert.

1466 g Acetoacetylaminobenzol werden in 10 Liter Wasser und 800 ml 33%iger Natronlauge gelöst, mit 40 g Oleylaminacetat versetzt und mit 700 ml 80%iger Essigsäure gefällt. Die Kupplung erfolgt durch langsames Zulaufen der Bis-diazoniumsalzlösung zur Suspension der gefällten Kupplungskomponente, wobei der pH-Wert mit 6%iger Natronlauge bei etwa 4,5 gehalten wird.

Nach Beendigung der Kupplung wird die essigsaure Suspension auf 50°C erwärmt. Nun werden 50 g Dodecyl-benzyl-dimethyl-ammoniumchlorid, 250 g Talgfett-propylen-diämin und 100 g Bis-4-aminocyclohexyl-methan zugegeben. Man erhitzt auf 90 bis 100°C und hält diese Temperatur 30 Minuten aufrecht. Dann wird die Mischung mit 1,5 Liter 33%iger Natronlauge alkalisch gestellt und einige Stunden bei 90 bis 100°C gehalten. Anschliessend wird das Produkt filtriert, gewaschen, getrocknet und gemahlen.

Man erhält eine gut dispergierbare Präparation von Pigment Yellow 12 (C.I. 21090), die grünstichiggelbe, farbstarke, gut fliessbare Tiefdruckfarben auf Toluolbasis liefert, mit denen glänzende und nicht durchschlagende Drucke erhalten werden.

*Beispiel 2*

Verfährt man wie in Beispiel 1, erhitzt jedoch das alkalische Gemisch nicht mehrere Stunden auf 90 bis 100°C sondern etwa 30 Minuten auf 150°C im Autoklav, so wird ein Produkt mit vergleichbaren Eigenschaften erhalten.

*Beispiel 3*

Verfährt man gemäss Beispiel 1, setzt aber das Diamin erst nach dem Filtrieren dem Presskuchen zu, so erhält man ein Produkt mit vergleichbaren Eigenschaften.

*Beispiel 4*

Verfährt man nach Beispiel 2, setzt aber das Diamin erst dem Presskuchen zu, so erhält man ebenfalls ein Produkt mit vergleichbaren Eigenschaften.

*Beispiel 5*

Verfährt man nach Beispiel 1, setzt aber anstelle des Dodecyl-benzyl-dimethyl-ammoniumchlorids Dimethyl-cocosfett-amin ein, so erhält man ein grünstichigeres Produkt.

*Beispiel 6*

Verfährt man gemäss Beispiel 1 bis 4, setzt jedoch als Diamin eines der anderen vorstehend genannten cycloaliphatischen Diamine ein, so erhält man Produkte mit vergleichbaren Eigenschaften.

*Beispiel 7*

Verfährt man nach Beispiel 1 bis 4, setzt jedoch anstelle des Talgfettpropylendiamins Oleylamin oder Talgfett-dipropylentriamin ein, so erhält man vergleichbare Produkte.

*Beispiel 8*

Verfährt man gemäss Beispiel 1, setzt jedoch als Kupplungskomponente ein Gemisch von 1320 g Acetoacetylaminobenzol und 215 g Acetoacetylamino-4-methoxybenzol ein, so erhält man eine Präparation, die sehr gut für Tiefdruckfarben geeignet ist.

*Beispiel 9*

Verfährt man nach Beispiel 1, setzt jedoch der Kupplungskomponente 160 g Oleylaminacetet zu und fügt der Suspension nach der Kupplung 150 g Dodecyl-benzyl-dimethyl-ammoniumchlorid, 750 g Talgfett-propylen-diamin und 300 g Bis-4-aminocyclohexyl-methan zu, so erhält man ebenfalls eine Pigmentpräparation mit den in Beispiel 1 genannten vorteilhaften Eigenschaften, die jedoch zu rotstichiggelben, farbstarken, gut fliessbaren Tiefdruckfarben auf Toluolbasis führt, mit denen glänzende und nicht durchschlagende Drucke erhalten werden.

**Patentansprüche**

1. Azopigmentpräparationen, gekennzeichnet durch einen Gehalt an 5 bis 40% eines langkettigen, aliphatischen, primären Amins und 2 bis 20%, jeweils bezogen auf das Gewicht des Pigments, eines Diamins der allgemeinen Formel I

$$H_2N - A - NH_2 \quad (I)$$

in der A ein aliphatischer Kohlenwasserstoffrest mit 6 bis 30 Kohlenstoffatomen ist.

2. Verfahren zur Herstellung der Azopigmentpräparationen nach Anspruch 1, dadurch gekennzeichnet, dass man ein langkettiges aliphatisches primäres Amin und ein Diamin der allgemeinen Formel I

$$H_2N - A - NH_2 \quad (I)$$

in der A ein aliphatischer Kohlenwasserstoffrest mit 6 bis 30 C-Atomen ist, vor, während oder nach der Kupplung zusetzt.

3. Verfahren nach Anspruch 2, dadurch gekennzeichnet, dass als Emulgator ein Salz eines langkettigen Amins und/oder ein kationisches Hilfsmittel vom

Typ der Phasentransferkatalysatoren zugesetzt werden.

4. Verfahren nach Anspruch 2 und 3, dadurch gekennzeichnet, dass der Kupplungskomponente bis zu 12 Gew.-% eines Salzes eines langkettigen Amins zugesetzt werden.

5. Verfahren nach Anspruch 2 bis 4, dadurch gekennzeichnet, dass nach der Kupplung bis zu 8%, bezogen auf das Gewicht des Pigments, einer kationischen Verbindung vom Typ der Phasentransferkatalysatoren zugesetzt werden.

6. Verfahren nach Anspruch 2 bis 5, dadurch gekennzeichnet, dass 5 bis 40%, bezogen auf das Gewicht des Pigments, des langkettigen aliphatischen primären Amins eingesetzt werden.

7. Verfahren nach Anspruch 2 bis 6, dadurch gekennzeichnet, dass 10 bis 30%, bezogen auf das Pigmentgewicht, des langkettigen aliphatischen primären Amins nach der Kupplung zugesetzt werden.

8. Verfahren nach Anspruch 2 bis 7, dadurch gekennzeichnet, dass 2 bis 20%, bezogen auf das Pigmentgewicht, an Diamin der Formel I eingesetzt werden.

9. Verfahren nach Anspruch 2 bis 8, dadurch gekennzeichnet, dass 4 bis 12%, bezogen auf das Pigmentgewicht, an Diamin der Formel I nach der Kupplung zugesetzt werden.

10. Verwendung der Azopigmentpräparationen nach Anspruch 1 zur Herstellung von Tiefdruckfarben.

## Claims

1. Azo pigment formulations which contain 5 to 40% of a long-chain aliphatic primary amine and 2 to 20%, each referred to the weight of the pigment, of a diamine of the general formula I

$$H_2N - A - NH_2 \qquad (I)$$

in which A is an aliphatic hydrocarbon radical having from 6 to 30 carbon atoms.

2. A process for the preparation of azo pigment preparations as claimed in claim 1, which process comprises addig a long-chain aliphatic primary amine and a diamine of the general formula I

$$H_2N - A - NH_2 \qquad (I)$$

in which A is an aliphatic hydrocarbon radical having from 6 to 30 C atoms, before, during of after the coupling.

3. The process as claimed in claim 2, wherein, as an emulsifier a salt of a long-chain amine and/or a cationic auxiliary of the phase transfer catalyst type are added.

4. The process as claimed in claims 2 and 3, wherein up to 12% by weight of a salt of a long-chain amine are added to the coupling component.

5. The process as claimed in claims 2 to 4, wherein up to 8%, referred to the weight of the pigment, of a cationic compound of the phase transfer catalyst type are added after the coupling.

6. The process as claimed in claims 2 to 5, wherein 5 to 40%, referred to the weight of the pigment, of a long-chain aliphatic primary amine are employed.

7. The process as claimed in claims 2 to 6, wherein 10 to 30%, referred to the weight of the pigment, of a long-chain aliphatic primary amine are added after the coupling.

8. The process as claimed in claims 2 to 7, wherein 2 to 20%, referred to the weight of the pigment, of a diamine of the formula I are employed.

9. The process as claimed in claims 2 to 8, wherein 4 to 12%, referred to the weight of the pigment, of a diamine of the formula I are added after the coupling.

10. The use of azo pigment preparations as claimed in claim 1 for the preparation of intaglio printing inks.

## Revendications

1. Compositions à base de pigments azoïques caractérisées en ce qu'elles contiennent de 5 à 40% d'une amine primaire aliphatique à longue chaîne et de 2 à 20%, à chaque fois par rapport au poids du pigment, d'une diamine répondant à la formule générale I

$$H_2N - A - NH_2 \qquad (I)$$

dans laquelle A représente un radical hydrocarboné aliphatique contenant de 6 à 30 atomes de carbone.

2. Procédé pour préparer les compositions à base de pigments azoïques selon la revendication 1, procédé caractérisé en ce qu'on ajoute une amine primaire aliphatique à longue chaîne et une diamine répondant à la formule générale I

$$H_2N - A - NH_2 \qquad (I)$$

dans laquelle A représente un radical hydrocarboné aliphatique contenant de 6 à 30% atomes de carbone, avant, pendant ou après la copulation.

3. Procédé selon la revendication 2, caractérisé en ce qu'on ajoute, comme émulsionnant, un sel d'une amine à longue chaîne et/ou un adjuvant cationique du type des catalyseurs de transfert de phase.

4. Procédé selon l'une quelconque des revendications 2 et 3, caractérisé en ce qu'on ajoute au copulant, en une proportion pouvant aller jusqu'à 12% en poids, un sel d'une amine à longue chaîne.

5. Procédé selon l'une quelconque des revendications 2 à 4, caractérisé en ce qu'on ajoute, après la copulation, en une proportion pouvant aller jusqu'à 8% par rapport au poids du pigment, un composé cationique du type des catalyseurs de transfert de phase.

6. Procédé selon l'une quelconque des revendications 2 à 5, caractérisé en ce qu'on utilise de 5 à 40%, par rapport au poids du pigment, de l'amine primaire aliphatique à longue chaîne.

7. Procédé selon l'une quelconque des revendications 2 à 6, caractérisé en ce qu'on ajoute, après la

copulation, de 10 à 30%, par rapport au poids du pigment, de l'amine primaire aliphatique à longue chaîne.

8. Procédé selon l'une quelconque des revendications 2 à 7, caractérisé en ce qu'on met en jeu de 2 à 20% d'une diamine de formule I par rapport au poids du pigment.

9. Procédé selon l'une quelconque des revendications 2 à 8, caractérisé en ce qu'on ajoute, après la copulation, de 4 à 12% d'une diamine de formule I par rapport au poids du pigment.

10. Application des compositions à base de pigments azoïques selon la revendication 1 pour la préparation d'encres d'héliogravure.